Europäisches Patentamt

European Patent Office

Office européen des brevets

(11) Veröffentlichungsnummer: **0 057 354**
**B1**

(12) **EUROPÄISCHE PATENTSCHRIFT**

(45) Veröffentlichungstag der Patentschrift:
**31.10.84**

(21) Anmeldenummer: **82100212.8**

(22) Anmeldetag: **14.01.82**

(51) Int. Cl.³: **F 16 D 23/12**

(54) **Reibungskupplung für Kraftfahrzeuge.**

(30) Priorität: **30.01.81 DE 3103032**

(43) Veröffentlichungstag der Anmeldung:
**11.08.82 Patentblatt 82/32**

(45) Bekanntmachung des Hinweises auf die Patenterteilung:
**31.10.84 Patentblatt 84/44**

(84) Benannte Vertragsstaaten:
**DE FR GB IT SE**

(56) Entgegenhaltungen:
**DE - A - 1 922 913
DE - A - 2 935 079
FR - A - 1 403 829**

(73) Patentinhaber: **BAYERISCHE MOTOREN WERKE
Aktiengesellschaft, Postfach 40 02 40 Petuelring 130,
D-8000 München 40 (DE)**

(72) Erfinder: **Scherg, Andreas, Dipl. Ing.,
Karl-Witthalm-Strasse 18/4, D-8000 München 70 (DE)**

(74) Vertreter: **Dexhelmer, Rolf, Bayerische Motoren Werke
Aktiengesellschaft Postfach 40 02 40 Petuelring 130 -
AJ-21, D-8000 München 40 (DE)**

**Beschreibung**

Die Erfindung bezieht sich auf eine Reibungskupplung für Kraftfahrzeuge, wie sie im Oberbegriff des Hauptanspruchs beschrieben ist.

Eine solche Kupplung kann bspw. aus der DE-A-1 455 541 entnommen werden. Ganz allgemein werden solche Kupplungen wegen der Art ihrer Ausrückung als gezogene Kupplungen bezeichnet. Sie haben gegenüber gedrückten Kupplungen unter anderem den Vorteil, daß sie leichter sind und eine kompaktere Bauweise zulassen. Dennoch finden sie in den Kraftfahrzeugen selten Anwendung. Der Grund liegt vor allem in ihrer erschwerten Montage. Bei einer gedrückten Kupplung wird die Kupplung ohne Ausrückgabel am Schwungrad vormontiert, die Ausrückgabel selbst sitzt in einem Gehäuse, das die Kupplung nach dem Zusammenbau abdeckt und das je nach Auslegung einstückig mit dem Getriebegehäuse ausgeführt sein kann. Beim Zusammenfahren dieses Gehäuses mit dem Zylinderkurbelgehäuse schiebt sich die Ausrückgabel mit ihrer Gabelöffnung über das Ausrücklager bis zu einem Anschlag für die Betätigung des Ausrücklagers. Bei einer gezogenen Kupplung ist eine solche Montage nicht möglich, weil die Ausrückgabel wegen der Betätigungsrichtung hinter dem Anschlag des Ausrücklagers angeordnet sein muß.

Aufgabe der Erfindung ist eine Reibungskupplung, bei der das sie umgebende Gehäuse auch dann leicht montiert und demontiert werden kann, wenn sich die Ausrückgabel bei der Montage nicht über das Ausrücklager schieben läßt.

Die Aufgabe wird erfindungsgemäß gelöst mit den kennzeichnenden Merkmalen des Hauptanspruchs. Weitere vorteilhafte Ausgestaltungen der Erfindung ergeben sich aus den Unteransprüchen.

Durch die zurückgezogene Stellung der Ausrückgabel läßt sich das Gehäuse ohne weiteres mit dem Zylinderkurbelgehäuse verschrauben. Anschließend wird die Ausrückgabel durch eine im Gehäuse angebrachte Öffnung in ihre Arbeitsstellung geschoben. Beim Demontieren des Gehäuses wird entsprechend verfahren. Die Ausrückgabel wird in die Haltespange zurückgezogen, dann das Gehäuse vom Zylinderkurbelgehäuse gelöst.

Die Erfindung eignet sich besonders für gezogene Kupplungen. Es ist aber auch bei einer gedrückten Kupplung ein Ausrücklager denkbar, das bei der Montage des Gehäuses ein einfaches Überschieben der Ausrückgabel nicht zuläßt. In diesem Fall kann die Erfindung auch bei gedrückten Kupplungen angewendet werden.

Des weiteren wirkt sich die Erfindung besonders dann vorteilhaft aus, wenn das Gehäuse einstückig mit dem Getriebegehäuse ausgeführt ist. Bei einem solch einheitlichen Gehäuse besteht in der Regel keine Möglichkeit, die Ausrückgabel einzubauen, nach dem das Gehäuse mit dem Zylinderkurbelgehäuse zusammengefahren und verschraubt ist.

Die Erfindung wird anhand des in den Figuren dargestellten vorteilhaften Ausführungsbeispiels näher erläutert. Es zeigt im einzelnen

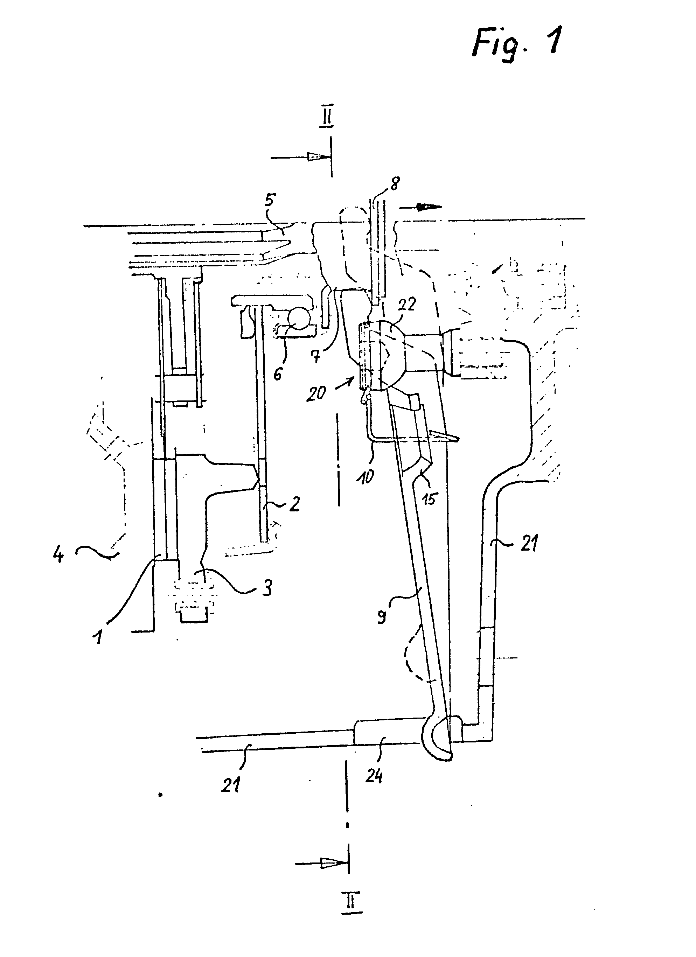

Fig. 1 eine Reibungskupplung nach der Erfindung;

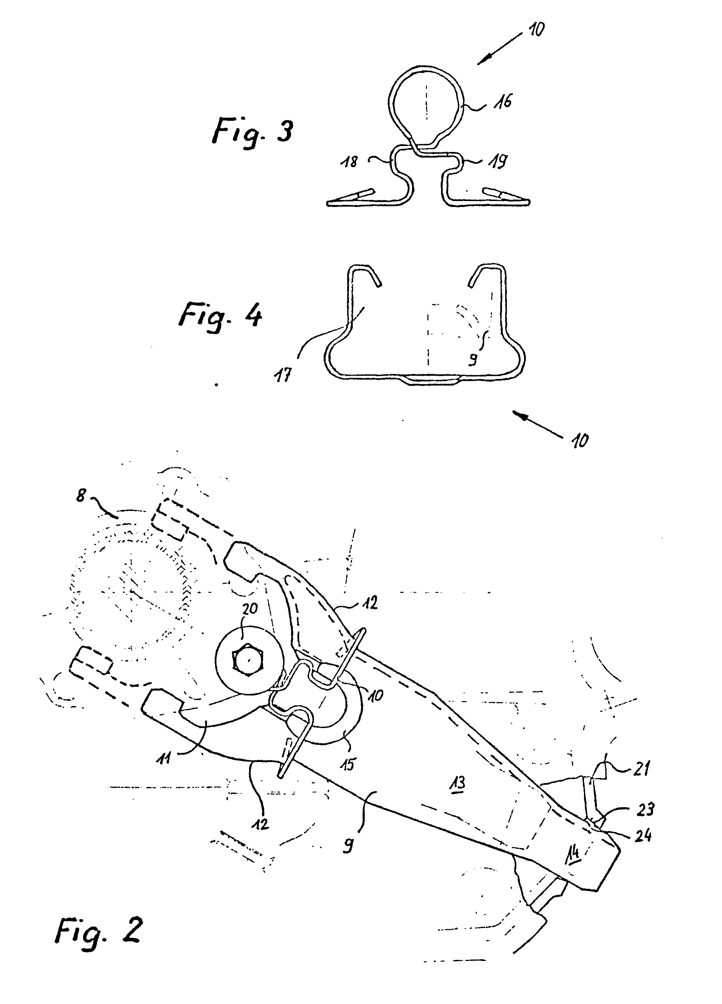

Fig. 2 eine Schnittdarstellung der Reibungskupplung entsprechend dem Schnitt II-II in Fig. 1;

Fig. 3 eine Vorderansicht einer Montagespange und

Fig. 4 eine Draufsicht nach Fig. 3.

Eine gezogene Reibungskupplung weist eine Reibscheibe 1 auf, die durch eine Tellerfeder 2 und über eine Druckplatte 3 gegen ein Schwungrad 4 einer nicht näher dargestellten Brennkraftmaschine gepreßt wird. Die Reibscheibe 1 ist auf einer Getriebewelle 5 verdrehfest, jedoch axial verschiebbar gelagert. Ein Ausrücklager 6 ist so an der Tellerfeder 2 angeordnet, daß es die Getriebewelle 5 konzentrisch und mit Abstand umgibt. Der von der Tellerfeder 2 abgewandte, nicht umlaufende Teil des Ausrücklagers 6 geht in einen zylindrischen Abschnitt 7 über, der durch einen Ringbund 8 getriebeseitig abgeschlossen ist.

Eine Ausrückgabel 9 ist verschiebbar in einer Montagespange 10 unterhalb des Ausrücklagers 6 gehalten. Die Ausrückgabel 9 besteht aus einem länglichen Guß- oder Blechteil, dessen beide längeren Seiten zur Erhöhung der Stabilität zu U-förmigen Sietenflächen abgebogen sind. An ihrem zum Ausrücklager 6 hinweisenden Abschnitt weist sie eine Gabelöffnung 11 auf, wobei sich ihre Umrißkanten in diesem Bereich schulterartig verbreitern, wie bei 12 dargestellt. In einem vom Ausrücklager 6 entfernten Abschnitt 13 verlaufen die Umrißkanten der Ausrückgabel 9 konisch aufeinander zu und gehen dann in einen parallelen Endabschnitt 14 über. Die Gabelöffnung 11 verlängert sich in dem mittleren Bereich der Ausrückgabel 9 zu einer kugelpfannenförmigen Lagerstelle 15.

Die Montagespange 10 besteht aus Federstahldraht und ist so geformt, daß sie eine Öse 16 bildet, die in zwei gekreuzte Schenkel übergeht. Die Schenkel sind in ihrem weiteren Verlauf rechtwinklig abgebogen und bilden ein Aufnahmeteil 17 für die Ausrückgabel 9. Zwischen der Öse 16 und dem Aufnahmeteil 17 weisen die Schenkel je eine Ausbuchtung 18, 19 auf. Durch Gegeneinanderdrücken dieser Ausbuchtungen vergrößert sich der Durchmesser der Öse 16. Im Bereich des Aufnahmeteils 17 sind die Drahtenden der Schenkel so nach innen gebogen, daß sie die U-förmigen Seitenflächen der Ausrückgabel 9 hintergreifen können.

Die Montagespange 10 ist mit ihrer Öse 16 in eine Nut eines Lagerbolzens 20 eingehängt, der in einem die Kupplung umgebenden Gehäuse 21 befestigt ist. Das Gehäuse 21, es ist nur teilweise dargestellt, ist einstückig mit dem Getriebegehäuse ausgeführt und an dem nicht dargestellten Zylinderkurbelgehäuse verschraubt. Der Lagerbolzen 20 weist im Bereich der eingehängten Montagespange 10 einen Halbkugelkopf auf mit einer rückseitigen kugeligen Lagerfläche 22.

Beim Montieren des Gehäuses 21 liegt die Ausrückgabel 9 mit ihren schulterartig verbreiterten Außenkanten 12 auf dem Aufnahmeabschnitt 17 der Montagespange und sitzt mit ihrem parallelen Endabschnitt 14 an den Rändern 23 einer Öffnung 24 fest, die im Gehäuse 21 vorgesehen ist. Bei entsprechender Ausgestaltung der Öffnung 24 ist es denkbar, daß die Ausrückgabel 9 statt mit ihrem Endabschnitt 14 mit ihrem konischen Abschnitt 13 an den Rändern 23 der Öffnung 24 festsitzt. Das Gehäuse 21 wird mit dem Zylinderkurbelgehäuse zusammengefahren und verschraubt. Danach wird die Ausrückgabel 9 in die Richtung des Ausrücklagers 6 geschoben, bis der Lagerbolzen 20 mit seiner kugeligen Lagerfläche 22 in der kugelpfannenförmigen Lagerstelle 15 aufliegt. In dieser Stellung umgibt die Gabelöffnung 11 das Ausrücklager 6 mit Abstand halbkreisförmig und ihre Enden hintergreifen den als Anschlag dienenden Ringbund 8 so, daß der Ausrückhebel bei seiner Betätigung das Ausrücklager 6 in Pfeilrichtung bewegt und die Reibungskupplung gelöst wird. Die weitere Befestigung der Ausrückgabel 9 in ihrer Arbeitsstellung ist allgemein bekannt und braucht hier nicht näher beschrieben zu werden.

Beim Demontieren des Gehäuses 21 wird in umgekehrter Reihenfolge entsprechend verfahren.

Um beim Betrieb den Pegel des von der Kupplung verursachten Geräusches zu verringern, kann die Öffnung 24 mit einem passenden Deckel verschlossen werden.

## Patentansprüche

1. Reibungskupplung für Kraftfahrzeuge, mit mindestens einer Reibscheibe (1), die durch eine Tellerfeder (2) und über eine Druckplatte (3) gegen ein Schwungrad (4) gepreßt wird, mit einem an der Tellerfeder (2) vorgesehenen Ausrücklager (6), das an seinem der Tellerfeder (2) abgewandten Abschnitt (7) Mittel für den Eingriff einer Ausrückgabel (9) aufweist, sowie mit einem die Reibungskupplung umgebenden Gehäuse (21), gekennzeichnet durch eine in dem Gehäuse (21) angeordnete Montagespange (10), in der die Ausrückgabel (9) verschiebbar ist und die beim Montieren und Demontieren des Gehäuses (21) die Ausrückgabel (9) in einer gegenüber dem Ausrücklager (6) zurückgezogenen Montagestellung hält.

2. Reibungskupplung nach Anspruch 1, dadurch gekennzeichnet, daß die Montagespange (10) aus Federstahldraht so geformt ist, daß sie eine Öse (16) bildet, die in zwei gekreuzte Schenkel übergeht, und daß die Schenkel in einen rechtwinklig zur Ebene der Öse (16) abgebogenen Aufnahmeabschnitt (17) für die Ausrückgabel (9) auslaufen.

3. Reibungskupplung nach Anspruch 2, dadurch gekennzeichnet, daß die Schenkel der Montagespange (10) zwischen der Öse (16) und dem Aufnahmeabschnitt (17) je eine Ausbuchtung (18, 19) aufweisen und die Drahtenden der Montagespange (10) im Bereich des Aufnahmeabschnitts (17) nach innen gebogen sind.

4. Reibungskupplung nach einem der Ansprüche 1—3 bei der sich die Umrißkanten (12) der Ausrückgabel (9) im Bereich ihrer das Ausrücklager (6) halbkreisförmig umfassenden Gabelöffnung (11) schulterartig verbreitern, dadurch gekennzeichnet, daß die Ausrückgabel (9) von der Montagespange (10) umgeben ist, die mit ihrer Öse (16) an einem im Gehäuse (21) angeordneten Lagerbolzen (20) für die Ausrückgabel (9) eingehängt ist und daß die Ausrückgabel (9) in der zurückgezogenen Montagestellung mit ihren schulterartig verbreiterten Außenkanten (12) im Aufnahmeteil (17) der Montagespange (10) aufliegt.

5. Reibungskupplung nach einem der Ansprüche 1—4, dadurch gekennzeichnet, daß die Umrißkanten der Ausrückgabel (9) in einem vom Ausrücklager (6) entfernten Abschnitt (13) konisch aufeinander zu laufen und in einen parallelen Endabschnitt (14) übergehen, und daß die Ausrückgabel (9) in der zurückgezogenen Montagestellung mit ihrem konischen Abschnitt (13) oder ihrem Endabschnitt (14) an den Rändern (23) einer im Gehäuse (21) vorgesehenen Öffnung (24) sitzt.

## Claims

1. A friction clutch for motor vehicles having at least one friction disc (1), which is urged by a plate spring (2) and by way of a pressure plate (3) against a flywheel (4), and comprising a release bearing (6) which is provided on the plate spring (2) and has, on that portion (7) thereof that faces away from the plate spring (2), means for the engagement of a disengaging fork (9), the clutch also having a casing (21), characterized by a mounting clip (10), which is arranged in the casing and in which the disengaging fork (9) is displaceable and which holds the disengaging fork (9) in a position retracted from the release bearing (6) during mounting and removal of the casing (21).

2. A friction clutch according to claim 1, characterized in that the mounting clip (10), made of spring steel, is so shaped that it forms a ring which is adjoined by two crossed limbs, and in that the limbs terminate in a portion (17) which is for receiving the disengaging fork (9) and is bent away at right angles to the plane of the ring (16).

3. A friction clutch according to claim 2, characterized in that the limbs of the mounting clip (10) each comprise a bowed portion (18, 19) between the ring (16) and the fork-receiving portion (17), and the ends of the wire forming the mounting clip (10) are bent inwardly in the zone of the fork-receiving portion (17).

4. A friction clutch according to any one of claims 1—3, wherein the peripheral edges (12) of the disengaging fork (9) are widened in the form of shoulders in the zone of the opening (11) of the fork which embraces the release bearing over a semicircle, characterized in that the disengaging fork (9) is surrounded by the mounting clip (10), which is suspended by its ring (16) on a bearing pin (20) for the disengaging fork (9), which bearing pin is arranged in the casing (21), and in that the disengaging fork (9), in the retracted mounting position, lies in the fork-receiving part (17) of the mounting clip (10) by way of its outer edges (12) widened to form shoulders.

5. A friction clutch according to any one of claims 1—4, characterized in that the peripheral edges of the disengaging fork (9) extend towards each other in the manner of a wedge in a portion (13) remote from the release bearing (6) and merge with a parallel bent portion (14), and in that the disengangig fork (9), in the retracted mounting position, is mounted by its wedge-shaped portion (13) or by its end portion (14) on the edges (23) of an opening (24) formed in the casing (21).

**Revendications**

1. Accouplement à friction pour véhicules automobiles, comportant au moins un disque de friction (1), qui est comprimé au moyen d'un ressort à disques (2) et par l'intermédiaire d'une plaque de pression (3) contre un volant (4), un dispositif de débrayage (6) prévu sur le ressort à disques (2) et qui est pourvu sur son tronçon (7) situé à l'opposé du ressort à disques (2) de moyens pour que prenne prise une fourchette de débrayage (9), ainsi qu'un carter (21) entourant l'accouplement à friction, caractérisé par une boucle d'assemblage (10) disposée dans le carter (21), dans laquelle peut se déplacer la fourchette de débrayage (9) et qui, lors du montage et du démontage du carter (21), maintient la fourchette de débrayage (9) dans une position de montage prévue en retraint par rapport à la butée de débrayage (6).

2. Accouplement à friction selon la revendication 1, caractérisé en ce que la boucle d'assemblage (10) est formée en fil d'acier à ressort de telle manière, qu'elle forme un oeillet (16) qui se continue par deux branches croisées, et en ce que les branches vont se terminer en un tronçon de logement (17) recevant la fourchette de débrayage (9), replié à angle droit par rapport au plan de l'oeillet (16).

3. Accouplement à friction selon la revendication 2, caractérisé en ce que les branches de la boucle d'assemblage (10) comportent chancune entre l'oeillet (16) et le tronçon de logement (17) une courbure (18, 19), et les extrémités du fil de la boucle de montage (10) sont repliées vers l'intérieur dans la zone du tronçon de logement (17).

4. Accouplement à friction selon l'une des revendications 1 à 3, dans lequel les bords de contour (12) de la fourchette de débrayage (9) s'élargissent à la manière d'épaulements dans la zone de son ouverture (11) entourant en forme de demi-cercle le dispositif de débrayage (6), caractérisé en ce que la fourchette de débrayage (9) est entourée par la boucle d'assemblage (10), qui est accrochée par son oeillet (16) à un boulon de support (20) monté dans le carter (21) pour la fourchette de débrayage (9), et en ce que la fourchette de débrayage (9), dans la position de montage prévue en retrait, se place par ses bords extérieurs (12) élargis à la manière d'épaulements, dans la partie (17), formant logement, de la boucle d'assemblage (10).

5. Accouplement à friction selon l'une des revendications 1 à 4, caractérisé en ce que les bords de contour de la fourchette de débrayage (9) se rapprochent l'une de l'autre selon une forme conique en un tronçon (13) éloigné du dispositif de débrayage (6), et se continuent par un tronçon d'extrémité parallèle (14), et en ce que la fourchette de débrayage (9), dans la position de montage prévue en retrait, se place par son tronçon conique (13) ou son troçon d'extrémité (14) contre les bords (23) d'une ouverture (24) prévue dans le carter (21).

Fig. 1

Fig. 3

Fig. 4

Fig. 2